# EUROPEAN PATENT SPECIFICATION

(11) **EP 2 591 966 B1**
(45) Date of publication and mention of the grant of the patent: **27.02.2019**
(21) Application number: 11188791.5
(22) Date of filing: 11.11.2011
(51) Int. Cl.: B60W 30/08, B60R 21/0136, B60R 21/0134, B60W 50/00, B60R 21/01

(54) **Vehicle safety system comprising active and passive safety means**
Fahrzeugsicherheitssystem mit aktiven und passiven Sicherheitselementen
Système de sécurité d'un véhicule avec des éléments actifs et passifs de sécurité

(43) Date of publication of application: 15.05.2013
(73) Proprietor: Volvo Car Corporation, 40531 Göteborg (SE)
(72) Inventor: Sandström, Peter, 41301 Göteborg (SE); Israelsson, Erik, 41663 Göteborg (SE)
(74) Representative: Kransell & Wennborg KB

(56) References cited:
- DE-A1- 10 312 104
- DE-A1- 10 334 699
- DE-A1-102005 009 146
- DE-A1-102006 042 454
- DE-A1-102009 002 375

## Description

### TECHNICAL FIELD

The present invention relates to a safety system in a vehicle for avoiding or mitigating a collision with other road users.

### BACKGROUND OF THE INVENTION

Automotive safety systems are often divided into active (preventive) safety systems and passive (protective) safety systems respectively. Whereas the purpose of the passive safety systems is to mitigate injuries caused by an accident, the purpose of the active safety systems is to avoid accidents or to mitigate the consequences thereof.

A good understanding of the traffic situation around a vehicle is more or less a necessity in order to achieve efficient safety systems, particularly active safety systems. Radar sensing technology (possibly in combination with camera vision technology) is a widely used technique for detecting and tracking other road users around a vehicle and to estimate properties of the road users such as position and relative speed.

Active and passive safety applications usually imply different requirements on the sensors and the associated detection and tracking algorithms such as what types of road user to detect, which scenarios and dynamic maneuvers to manage and the acceptable levels of false alarm rate, as well as the required availability and capability to detect true road users.

As already mentioned, radar sensors are commonly used as principal sensor in active safety systems. For passive safety applications, designed to be activated when a detection means in the form of a collision sensor, e.g. an accelerometer, has detected a collision event, input data from a radar sensor can be used to optimize the function execution, e.g. an adaptation of airbag force to the measured relative speed (by radar) just prior to the collision detection (by accelerometer). However, an ideal radar sensor-supported managing (detecting and tracking) means is expected to be different for passive safety functions and active safety functions, i.e. a managing means supporting both passive safety functions and active safety functions would probably not be optimal. Typically, managing means logic for active safety must balance suppression of (unwanted) false positive detections and acknowledgement of true positive detections. The ob-vious motive is that false positive detections must be kept low to avoid false warnings or false interventions. At the same time, the suppression must not cause incorrect rejection of true positive detections, since this could lead to missed warnings or missed interventions in cases where they should be issued. Passive safety functions are assumed to be activated by a collision sensor, e.g. an accelerometer. Therefore, a managing means optimized for passive safety may be allowed to have lower suppression of false positive detections, since no activation will be issued unless the collision sensor confirms a colli-sion, i.e. no false positive detec-tions will ever cause unwanted function activation assu-ming that the collision sensor is robust with a high confidence level. The benefit from lo-wer suppression of false positive detections is a lowered risk of incorrect suppression of true positive detections, i.e. a more reliable detection of true positive detections.

Patent document DE 10 2009 002375 A1 discloses, according to the abstract, a method that involves activating a brake function with a predetermined braking force after the identified primary impact. Further according to the abstract, the functionality of an environment information acquisition is reviewed, where the environment information is recorded and evaluated for determining a current accident situation considering the review result. The predetermined braking force of the executed brake function is adjusted to the determined current accident situation.

Patent document DE 10 2005 009146 A1 discloses, according to the abstract, a driver assistance system for motor vehicles, comprising a sensor device for measuring data regarding the environment of the vehicle, at least two assistance functions, and a data processing device which evaluates the measured data, generates at least one specific environmental hypothesis for each assistance function, and supplies output data in a form that is edited for the respective assistance functions. Further according to the abstract, the inventive driver assistance system is characterized in that at least one environmental hypothesis is predefined in the data processing device. The at least one environmental hypothesis is provided with a structure that is subdivided into several partial hypotheses which are logically correlated such that output data of one partial hypothesis have some influence on the generation of the other partial hypothesis while at least two assistance functions indirectly or directly access a joint partial hypothesis.

Patent document DE 10 2006 042454 A1 discloses, according to the abstract, a control system for brake and passenger protection actuators, that has a controller unit containing power-output stages for operation of actuators, where power-output stages are controlled based on control instructions.

Patent document DE 103 34 699 A1 relates, according to the abstract, to a device for actuating an actuation system for protecting a pedestrian, said device being connected to an environment sensor system and a contact sensor system. Further according to the abstract the inventive device compares a first signal of the contact sensor system with a threshold value. The threshold value or the first signal is modified according to a second signal of the environment sensor system and the actuation system is actuated according to the result of the comparison.

Patent document DE 103 12 104 A1 relates, according to the abstract, to a device for activating restraint means that takes a dangerous situation into account during the activation of the restraint means. The dangerous situation is identified based on variables of the surroundings and on a vehicle handling. Further according to the abstract, a rain sensor is used as a surroundings sensor for generating the variables of the surroundings, and the identification of vehicle handling can ensue on the basis of a gearbox signal.

### SUMMARY OF THE INVENTION

The present invention seeks to optimize data input for passive safety functions through use of at least two different managing means optimized for passive safety functions and active safety functions respectively, in combination with a detection means, e.g. a collision sensor in the form of an accelerometer, to detect collision events.

Accordingly, the safety system which is mounted in a vehicle comprises a monitoring means which is configured for monitoring a road for detecting the relative approach of road users to said vehicle and providing a first signal indicative thereof; a first managing means which is operatively connected to the monitoring means and configured for activating, in response to the first signal, active safety means of the vehicle; a second managing means which is operatively connected to the monitoring means and configured for activating, in response to the first signal, passive safety means of the vehicle, said first and second managing means being connected in parallel; a detecting means which is configured for detecting a collision with another road user and providing a second signal indicative thereof, said detecting means being operatively connected to the passive safety means and configured for controlling, by means of said second signal, the activation of said passive safety means of the vehicle. Further, the first managing means is configured for optimizing the balance between suppression of false positive detections of an imminent collision and acknowledgement of true positive detections of an imminent collision, and the second managing means is configured to have a relatively lower suppression of false positive detections of an imminent collision than the first monitoring means and a relatively higher acknowledgement of true positive detections of an imminent collision.

Thus, the invention includes an additional managing means which is optimized for passive safety functions and a managing means which is optimized for active safety functions. These managing means are connected in parallel, thereby allowing said managing means to be optimized differently for their respective application.

By means of the invention, the passive safety systems may be provided with data with; a minimal rate of incorrect suppression of true positive sensor detections to passive safety functions (through low suppression); no false sensor data to passive safety functions due to unsuppressed false positive sensor detections (through the required activation of the detection means, e.g. a robust collision sensor); and maintained optimal balance between suppression of false positive detections and acknowledgement of true positive detections for active safety systems (since the two managing means are optimized differently without compromise between active safety functions and passive safety functions).

In order for the first and second managing means to optimize active and passive safety functions, respectively, they may, according to the invention, each comprise a detection unit. These detection units are individually configured with a threshold value for the first signal from the monitoring means, above which noise seldom rises and below which the first signal plus noise seldom falls.

In order for the first and second managing means to optimize active and passive safety functions, respectively, they may, according to the invention, also each comprise a tracking and estimating unit. These tracking and estimating units are individually configured with parameters of kinematical models which are adapted to the active safety means and to the passive safety means, respectively.

In order for the first and second managing means to optimize active and passive safety functions, respectively, they may, according to the invention, also each comprise an associating unit. These associating units are individually configured with a parameter interval within which measurements of properties of detected road users are allowed and this parameter interval is adapted to the active safety means and to the passive safety means, respectively.

Thus, the managing means according to the invention are well suited to see to that the active and passive safety means are activated and in operation at the right moment. In order for calculating and controlling the extent of activation of the active and passive safety means, respectively, the managing means may further comprise or the safety system may be supplemented by first and second calculating and control means.

A method for avoiding or mitigating a collision of a vehicle with other road users, not comprised in the present invention, comprises the steps of monitoring a road for detecting the relative approach of road users to said vehicle and providing a first signal indicative thereof; activating, in response to the first signal, active safety means of the vehicle and/or passive safety means of the vehicle; and detecting a collision with another road user and providing a second signal indicative thereof, and controlling, by means of said second signal, the activation of the passive safety means of the vehicle.

### BRIEF DESCRIPTION OF THE DRAWINGS

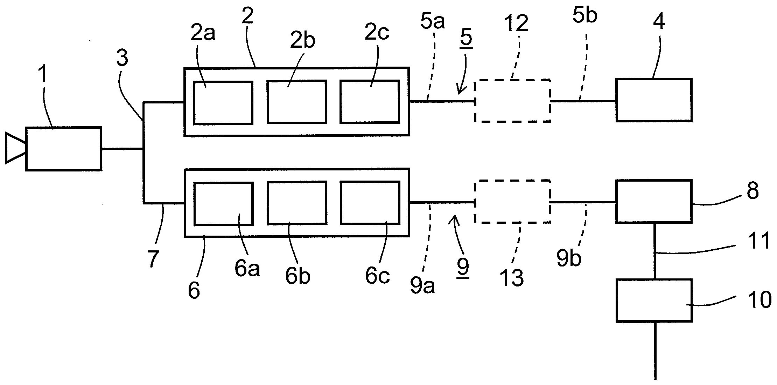

The present invention will be further described below by way of example only and with reference to the accompanying drawing, in which the only figure is a schematic block diagram of a simplified embodiment of a safety system according to the invention.

### DETAILED DESCRIPTION OF PREFERRED EMBODIMENTS

The safety system illustrated in the drawing is provided in a vehicle for avoiding or mitigating a collision with other road users, such as e.g. cars, trucks, motorcycles, mopeds, bicycles, pedestrians etc.. While, as mentioned, the safety system is illustrated by a block diagram, the vehicle is not shown in the drawing for reasons of clarity.

The safety system according to the invention comprises, in its most simple form, a monitoring means 1 which is configured for monitoring a road for detecting the relative approach of road users to the vehicle and providing a first signal indicative thereof. This monitoring means 1 may consist of one or more sensors of a suitable type, e.g. one or more sensors utilizing electromagnetic radiation. Accordingly, the one or more sensors may be radar-operated sensors. The monitoring means 1 may also consist of cameras or lasers or any suitable combination of different sensors. The one or more sensors generate low level sensor data (e.g. A/D-converted incoming radar echoes) to a number of managing means which are connected in parallel and which are individually adapted to support a set of safety functions that place similar requirements on types of objects, scenarios, probability of false alarm etc..

Thus, in its most simple form, the safety system according to the invention further comprises a first managing means 2 which is operatively connected to the monitoring means 1. In the drawing, this connection is illustrated by means of a signal line 3, though the connection may also be wireless. The first managing means 2 is configured for activating, in response to the first signal from the monitoring means 1 via the connection there-with, active safety means of the vehicle. These active safety means, illustrated in the dra-wing by a block 4, may include one or more of e.g. the anti-lock braking system (ABS), electronic stability system (ESP), active lane keeping system, active blind spot system, speed limit system, distance keeping systems, attention assist systems and other active safety arrangements in the vehicle for avoiding or mitigating a collision with other road users. The first managing means 2 may be connected to the active safety means 4 via a signal line 5, as in the drawing, or wirelessly. In the safety system there is also included a second managing means 6, which is operatively connected to the monitoring means 1, in parallel with the first managing means 2. The connection between the second managing means 6 and the monitoring means 1 is realized by means of a signal line 7 or wirelessly. The second managing means 6 is configured for activating, in response to the first signal from the monitoring means 1 via the connection therewith, passive safety means of the vehicle. These passive safety means, illustrated in the drawing by a block 8, may include one or more of e.g. the airbags and other restraint systems in the vehicle for mitigating the effects of a collision with another road user. The second managing means 6 may be connected to the passive safety means 8 via a signal line 9, as in the drawing, or wirelessly. Since the first and second managing means 2, 6 are connected in parallel, the active and passive safety means 4, 8 may be activated independently from each other and one at the time or both simultaneously, depending on the first signal from the monitoring means 1.

As already mentioned above, the first and second managing means 2, 6 are configured for optimizing the function of the active and passive safety means 4, 8 respectively. Accordingly, the first managing means 2 is configured for optimizing the balance between sup-pression of false positive detections of an imminent collision and acknowledgement of true positive detections of an imminent collision. The second managing means 6 is configured to have a relatively lower suppression of false positive detections of an imminent collision than the first monitoring means and a relatively higher acknowledgement of true positive detections of an imminent collision.

This is possible since the safety system according to the invention in its most simple form also comprises a detecting means 10 which is configured for detecting a collision with another road user and providing a second signal indicative thereof. The detecting means may comprise at least one collision sensor, e.g. an accelerometer, or comprise one or more sensors of any other suitable type for the intended purpose. The detecting means 10 is operatively connected to the passive safety means 8 and configured for controlling, by means of the second signal, the activation of the passive safety means 8 of the vehicle-le. The detecting means 10 is connected to the passive safety means 8 via a signal line 11 or wirelessly.

In order for the first and second managing means 2, 6 to optimize active and passive safety functions respectively, the first and second managing means 2, 6 may each comprise a detection unit 2a, 6a. There is a detection theory which deals with the problem of detecting other road users in the presence of (internal and external) noise. An appropriate signal threshold is determined, above which noise seldom rises and below which signal plus noise seldom falls. Whereas the former case corresponds to a so called false alarm, the latter case corresponds to a missed detection. The probability of false alarm is a fundamental parameter for a sensing system. The "cost" (i.e. negative consequence) of a false alarm depends very much on what functionality shall be activated when a detected road user is present. An audible warning due to an approaching road user may allow for a relative large probability of false alarm (and thus, a low signal threshold), whereas an autonomous braking or steering intervention will only allow for a relatively small probability of false alarm (and thus, a high signal threshold). These functionalities are examples of active safety systems. Examples of passive safety systems are systems that adapt or activate e.g. the airbag systems based on the presence of and information about other road users around the vehicle.

Since different functionality places different requirements on the probability of false alarm and also on what type of other road users to detect (a small object will seldom be detected with a high detection threshold), the detection threshold is an example of a parameter that can be individually adapted to type of functionality in each managing means 2, 6. Accordingly, the detection units 2a, 6a of the first and second managing means 2, 6 are individually configured with a threshold value for the first signal from the monitoring means, above which noise seldom rises and below which the first signal plus noise seldom falls.

In order for the first and second managing means 2, 6 to optimize active and passive safety functions respectively, the first and second managing means may also each comprise-se a tracking and estimating unit 2b, 6b. Tracking theory deals with the problem of keep-ing track of other road users which have been detected by the monitoring means 1. Estimation of road user properties constitutes a central part of the managing means 2, 6. A common, often used example of a tracking and estimating unit is the so called Kalman filter/estimator. The kinematical behaviour of an object is described by a model. A simple model can be that all objects have a constant acceleration. In situations where the true object motion conforms well to the kinematical model, the estimate of parameters (position, speed, etc.) can become quite accurate. However, when the object manouvers in a way which does not conform well to the kinematical model, the filter will fail to follow the manouvere and the estimate can become quite inaccurate.

Since different functionalities are interested in different scenarios and types of road users (objects) and road users such as pedestrians and vehicles behave differently and therefore, can be described by different kinematical models, the parameters of the kinematical models are examples of parameters which in each tracking and estimating unit 2b, 6b can be individually adapted to the type of functionality. Accordingly, the tracking and estimating units 2b, 6b of the first and second managing means 2, 6 are individually configured with parameters of kinematical models which are adapted to the active safety means 4 and to the passive safety means 8, respectively.

A still further central part of the managing means 2, 6 is the process of associating detections of another road user to a road user (object) in a list thereof. If the measured proper-ties, e.g. position and speed, of a detection differs very little from the properties of one other road user in the list thereof (as predicted by the kinematical model), the detection will be associated to that other road user. The measurement parameter interval within which measurements are allowed for being assigned to a certain road user, is called a gate. If the gates are very small, the probability of false alarm can be lowered at the cost of lower detection probability (or in other words robustness). The parameters defining gates are additional examples of parameters which, in each managing means 2, 6, can be individually adapted to the type of functionality. Accordingly, the first and second managing means 2, 6 may comprise associating units 2c, 6c. These associating units 2c, 6c are individually configured with a parameter interval within which measurements of properties of detected road users are allowed, and this parameter interval is adapted to the active safety means 4 and to the passive safety means 8, respectively.

As stated above, it is a characterizing feature of the present invention to have parallel individual managing means for activating safety functions which have different requirements on said managing means.

This is advantageous since e.g. an autonomous brake intervention for an approaching road user only allows for a relatively small false alarm rate of the managing means. Otherwise, it can be difficult for a driver to handle the effect of a false activation. The false alarm rate can be kept low e.g. by a suitable adaptation of the detection threshold and/or by a suitable choice of parameters for the kinematical model as mentioned above. Another use of the output from a managing means is for the adaptation of triggering levels of pyromatic airbag systems. Airbag systems of today rely heavily on crash event sensors (accelerometers) which have a relatively high detection threshold. If the activation criteria of an airbag are conditioned on the detection of a collision, it follows that the protective or passive safety functions will be much less sensitive to false alarms from the managing means - the output from the managing means alone will not be a sufficient activation criterium (and whatever phenomenum which causes a false sensor system output is unlikely to trigger a false crash sensor event).

For the passive safety function above, adaptation of airbag systems, a more susceptive managing means for sensor data is made possible through the criteria of a detected crash event. Since that strategy is not available for the preventive or active safety function mentioned above (autonomous brake intervention), it is here an advantage to have two separate managing means connected in parallel - one managing means for the active safety function (with e.g. a relatively high detection threshold) and one for the passive safety function (with e.g. a relatively low detection threshold).

The safety system according to the invention may be supplemented by first and second calculating and control means 12, 13. In the illustrated embodiment, the first and second calculating and control means 12, 13 are shown as separate parts of the safety system according to the invention, connected between the first managing means 2 and the active safety means 4 and between the second managing means 6 and the passive safety means 8 respectively. The first calculating and control means 12 is configured for calculating, when a collision with an approaching road user is imminent and the active safety means 4 is activated by a (third) signal from the first managing means 2 via a first branch 5a of the signal line 5, the extent of activation of the active safety means 4 of the vehicle and providing a fourth signal indicative thereof, via a second branch 5b of the signal line 5, to the active safety means, and controlling the extent of activation of the active safety means by means of the fourth signal. The second calculating and control means 13 is configured for calculating, when a collision with an approaching road user is imminent and the passive safety means 8 is activated by a (fifth) signal from the second managing means 6 via a first branch 9a of the signal line 9, the extent of activation of the passive safety means 8 of the vehicle and providing a sixth signal indicative thereof, via a second branch 9b of the signal line 9, to the passive safety means 8, and controlling the extent of activation of the passive safety means by means of the sixth signal. The first and second calculating and control means 12, 13 may each comprise a computer of a suitable type or any other means for the intended purpose.

Alternatively, the first and second calculating and control means 12, 13 may form part of the first and second managing means 2, 6 respectively.

Functionalities other than the above-mentioned two examples may require additional parallel managing means, i.e. two or more active or passive safety means may require use of additional first and second managing means 2, 6.

It is obvious to a skilled person that the safety system according to the present invention may be modified and altered within the scope of the subsequent claims without departing from the idea and purpose of the invention. Thus, the first and second managing means 2, 6 as well as the active and passive safety means 4, 8 may operate simultaneously, such that when the detection means 10 detects a collision and the passive safety means 8 are activated, the active safety means 4 affecting e.g. the brakes or the steering equipment may still be activated in order to mitigate the effects of the collision. The managing and detecting means forming part of the safety system according to the invention may, as indicated, vary in number, design and location on the vehicle.

## Claims

1. Safety system in a vehicle for avoiding or mitigating a collision with other road users, wherein said safety system comprises
a monitoring means (1) which is configured for monitoring a road for detecting the relative approach of road users to said vehicle and providing a first signal indicative thereof;
a first managing means (2) which is operatively connected to the monitoring means (1) and configured for activating, in response to the first signal, active safety means (4) of the vehicle; and
a second managing means (6) which is operatively connected to the monitoring means (1) and configured for activating, in response to the first signal, passive safety means (8) of the vehicle, and
wherein said first and second managing means (2, 6) are connected in parallel; **characterized in**
**that** a detecting means (10) which is configured for detecting a collision with another road user and providing a second signal indicative thereof, is operatively connected to the passive safety means (8) and configured for controlling, by means of said second signal, the activation of the passive safety means (8) of the vehicle,
**that** the first managing means (2) is configured for optimizing the balance between suppression of false positive detections of an imminent collision and acknowledgement of true positive detections of an imminent collision, and
**that** the second managing means (6) is configured to have a relatively lower suppression of false positive detections of an imminent collision than the first monitoring means and a relatively higher acknowledgement of true positive detections of an imminent collision.

2. Safety system according to claim 1, **characterized in**
**that** the first and second managing means (2, 6) each comprises a detection unit (2a, 6a), and
**that** said detection units (2a, 6a) are individually configured with a threshold value for said first signal from the monitoring means (1), above which noise seldom rises and below which said first signal plus noise seldom falls.

3. Safety system according to claim 1 or 2, **characterized in**
**that** the first and second managing means (2, 6) each comprises a tracking and estimating unit (2b, 6b), and
**that** said tracking and estimating units (2b, 6b) are individually configured with parameters of kinematical models which are adapted to the active safety means (4) and to the passive safety means (8), respectively.

4. Safety system according to any one of claims 1-3, **characterized in**
**that** the first and second managing means (2, 6) each comprises an associating unit (2c, 6c), and
**that** said associating units (2c, 6c) are individually configured with a parameter interval within which measurements of properties of detected road users are allowed, said parameter interval being adapted to the active safety means (4) and to the passive safety means (8), respectively.

5. Safety system according to any one of claims 1-4, **characterized in that** the monitoring means (1) comprises at least one sensor utilizing electromagnetic radiation.

6. Safety system according to any one of claims 1-5, **characterized in that** the monitoring means (1) comprises at least one radar-operated sensor.

7. Safety system according to any one of claims 1-6, **characterized in that** the monitoring means (1) comprises at least one camera.

8. Safety system according to any one of claims 1-7, **characterized in that** the detecting means (10) comprises at least one collision sensor.

9. Safety system according to any one of claims 1-8, **characterized in that** the detecting means (10) is an accelerometer.

10. Safety system according to claim 1, **characterized in that** said safety system further comprises
a first calculating and control means (12) which is configured for calculating, when a collision with an approaching road user is imminent and the active safety means (4) is activated by the first managing means (2), the extent of activation of the active safety means (4) of the vehicle and providing a (fourth) signal indicative thereof to said active safety means, thereby controlling the extent of activation of the active safety means (4); and
a second calculating and control means (13) which is configured for calculating, when a collision with an approaching road user is imminent and the passive safety means (8) is activated by the second managing means (6), the extent of activation of the passive safety means (8) of the vehicle and providing a (sixth) signal indicative thereof to said passive safety means, thereby controlling the extent of activation of the passive safety means (8).

## Patentansprüche

1. Sicherheitssystem in einem Fahrzeug zum Vermeiden oder Abmildern einer Kollision mit anderen Straßenbenutzern, wobei das Sicherheitssystem Folgendes umfasst:
ein Überwachungsmittel (1), das zum Überwachen einer Straße zum Erkennen der relativen Annäherung von Straßenbenutzern an das Fahrzeug und zum Bereitstellen eines dies anzeigenden ersten Signals konfiguriert ist;
ein erstes Verwaltungsmittel (2), das in Wirkbeziehung mit dem Überwachungsmittel (1) verbunden und zum Aktivieren aktiver Sicherheitsmittel (4) des Fahrzeugs in Ansprechen auf das erste Signal konfiguriert ist; und
ein zweites Verwaltungsmittel (6), das in Wirkbeziehung mit dem Überwachungsmittel (1) verbunden und zum Aktivieren passiver Sicherheitsmittel (8) des Fahrzeugs in Ansprechen auf das erste Signal konfiguriert ist, und
wobei das erste und das zweite Verwaltungsmittel (2, 6) parallel geschaltet sind;
**dadurch gekennzeichnet,**
**dass** ein Erkennungsmittel (10), das zum Erkennen einer Kollision mit einem anderen Straßenbenutzer und zum Bereitstellen eines dies anzeigenden zweiten Signals konfiguriert ist, in Wirkbeziehung mit den passiven Sicherheitsmitteln (8) verbunden und zum Steuern der Aktivierung der passiven Sicherheitsmittel (8) des Fahrzeugs mittels des zweiten Signals konfiguriert ist,
**dass** das erste Verwaltungsmittel (2) zum Optimieren des Ausgleichs zwischen einer Unterdrückung falsch positiver Erkennungen einer drohenden Kollision und einer Bestätigung richtig positiver Erkennungen einer drohenden Kollision konfiguriert ist und
**dass** das zweite Verwaltungsmittel (6) so konfiguriert ist, dass es eine relativ geringere Unterdrückung falsch positiver Erkennungen einer drohenden Kollision als das erste Überwachungsmittel und eine relativ höhere Bestätigung richtig positiver Erkennungen einer drohenden Kollision aufweist.

2. Sicherheitssystem nach Anspruch 1, **dadurch gekennzeichnet,**
**dass** das erste und das zweite Verwaltungsmittel (2, 6) je eine Erkennungseinheit (2a, 6a) umfassen und
**dass** die Erkennungseinheiten (2a, 6a) individuell mit einem Schwellenwert für das erste Signal vom Überwachungsmittel (1), über dem selten Geräusche auftreten und den das erste Signal plus Geräusche selten unterschreiten, konfiguriert sind.

3. Sicherheitssystem nach Anspruch 1 oder 2, **dadurch gekennzeichnet,**
**dass** das erste und das zweite Verwaltungsmittel (2, 6) je eine Verfolgungs- und Schätzeinheit (2b, 6b) umfassen und
**dass** die Verfolgungs- und Schätzeinheiten (2b, 6b) individuell mit Parametern kinematischer Modelle, die an die aktiven Sicherheitsmittel (4) bzw. an die passiven Sicherheitsmittel (8) angepasst sind, konfiguriert sind.

4. Sicherheitssystem nach einem der Ansprüche 1-3, **dadurch gekennzeichnet,**
**dass** das erste und das zweite Verwaltungsmittel (2, 6) je eine Assoziierungseinheit (2c, 6c) umfassen und
**dass** die Assoziierungseinheiten (2c, 6c) individuell mit einem Parameterintervall, innerhalb dessen Messungen von Eigenschaften erkannter Straßenbenutzer erlaubt sind, konfiguriert sind, wobei das Parameterintervall an die aktiven Sicherheitsmittel (4) bzw. an die passiven Sicherheitsmittel (8) angepasst ist.

5. Sicherheitssystem nach einem der Ansprüche 1-4, **dadurch gekennzeichnet, dass** das Überwachungsmittel (1) mindestens einen Sensor, der elektromagnetische Strahlung nutzt, umfasst.

6. Sicherheitssystem nach einem der Ansprüche 1-5, **dadurch gekennzeichnet, dass** das Überwachungsmittel (1) mindestens einen mit Radar arbeitenden Sensor umfasst.

7. Sicherheitssystem nach einem der Ansprüche 1-6, **dadurch gekennzeichnet, dass** das Überwachungsmittel (1) mindestens eine Kamera umfasst.

8. Sicherheitssystem nach einem der Ansprüche 1-7, **dadurch gekennzeichnet, dass** das Erkennungsmittel (10) mindestens einen Kollisionssensor umfasst.

9. Sicherheitssystem nach einem der Ansprüche 1-8, **dadurch gekennzeichnet, dass** das Erkennungsmittel (10) ein Beschleunigungsmesser ist.

10. Sicherheitssystem nach Anspruch 1, **dadurch gekennzeichnet, dass** das Sicherheitssystem ferner Folgendes umfasst:
ein erstes Kalkulier- und Steuermittel (12), das zum Kalkulieren des Grads einer Aktivierung der aktiven Sicherheitsmittel (4) des Fahrzeugs, wenn eine Kollision mit einem sich annähernden Straßenbenutzer droht und das aktive Sicherheitsmittel (4) durch das erste Verwaltungsmittel (2) aktiviert wird, und zum Bereitstellen eines dies anzeigenden (vierten) Signals für die aktiven Sicherheitsmittel konfiguriert ist, wodurch der Grad einer Aktivierung der aktiven Sicherheitsmittel (4) gesteuert wird; und
ein zweites Kalkulier- und Steuermittel (13), das zum Kalkulieren des Grads einer Aktivierung der passiven Sicherheitsmittel (8) des Fahrzeugs, wenn eine Kollision mit einem sich annähernden Straßenbenutzer droht und das passive Sicherheitsmittel (8) durch das zweite Verwaltungsmittel (6) aktiviert wird, und zum Bereitstellen eines dies anzeigenden (sechsten) Signals für die passiven Sicherheitsmittel konfiguriert ist, wodurch der Grad einer Aktivierung der passiven Sicherheitsmittel (8) gesteuert wird.

## Revendications

1. Système de sécurité dans un véhicule pour éviter ou atténuer une collision avec d'autres usagers de la route, ledit système de sécurité comprenant :
un moyen de surveillance (1), configuré pour surveiller une route pour détecter l'approche relative d'usagers de la route dudit véhicule, et fournir un premier signal représentatif correspondant ;
un premier moyen de gestion (2), connecté de manière fonctionnelle au moyen de surveillance (1) et configuré pour activer, en réponse au premier signal, un moyen de sécurité active (4) du véhicule ; et
un second moyen de gestion (6), connecté de manière fonctionnelle au moyen de surveillance (1) et configuré pour activer, en réponse au premier signal, un moyen de sécurité passive (8) du véhicule, et
lesdits premier et second moyens de gestion (2, 6) étant connectés en parallèle ;
le système de sécurité étant **caractérisé en ce que** :
un moyen de détection (10), configuré pour détecter une collision avec un autre usager de la route et fournir un deuxième signal représentatif correspondant, connecté de manière fonctionnelle au moyen de sécurité passive (8) et configuré pour contrôler, au moyen dudit deuxième signal, l'activation du moyen de sécurité passive (8) du véhicule ;
le premier moyen de gestion (2) est configuré pour optimiser l'équilibre entre la suppression de fausses détections positives d'une collision imminente et la validation de vraies détections positives d'une collision imminente ; et
le second moyen de gestion (6) est configuré pour avoir une suppression de fausses détections positives d'une collision imminente relativement plus faible que le premier moyen de surveillance, et une validation de vraies détections positives d'une collision imminente relativement plus élevée.

2. Système de sécurité selon la revendication 1, **caractérisé en ce que** :
les premier et second moyens de gestion (2, 6) comprennent chacun une unité de détection (2a, 6a) ; et
lesdites unités de détection (2a, 6a) sont configurées individuellement avec une valeur-seuil pour ledit premier signal en provenance du moyen de surveillance (1), au-dessus de laquelle le bruit augmente rarement et au-dessous de laquelle ledit premier signal plus le bruit tombent rarement.

3. Système de sécurité selon la revendication 1 ou 2, **caractérisé en ce que** :
les premier et second moyens de gestion (2, 6) comprennent chacun une unité de suivi et d'estimation (2b, 6b) ; et
lesdites unités de suivi et d'estimation (2b, 6b) sont configurées individuellement avec des paramètres de modèles cinématiques adaptés respectivement au moyen de sécurité active (4) et au moyen de sécurité passive (8).

4. Système de sécurité selon l'une quelconque des revendications 1 à 3, **caractérisé en ce que** :
les premier et second moyens de gestion (2, 6) comprennent chacun une unité d'association (2c, 6c) ; et
lesdites unités d'association (2c, 6c) sont configurées individuellement avec un intervalle de paramètres dans lequel des mesures de propriétés d'usagers de la route détectés sont autorisées, ledit intervalle de paramètres étant respectivement adapté au moyen de sécurité active (4) et au moyen de sécurité passive (8).

5. Système de sécurité selon l'une quelconque des revendications 1 à 4, **caractérisé en ce que** le moyen de surveillance (1) comprend au moins un capteur utilisant un rayonnement électromagnétique.

6. Système de sécurité selon l'une quelconque des revendications 1 à 5, **caractérisé en ce que** le moyen de surveillance (1) comprend un capteur à fonctionnement laser.

7. Système de sécurité selon l'une quelconque des revendications 1 à 6, **caractérisé en ce que** le moyen de surveillance (1) comprend au moins une caméra.

8. Système de sécurité selon l'une quelconque des revendications 1 à 7, **caractérisé en ce que** le moyen de détection (10) comprend au moins un capteur de collision.

9. Système de sécurité selon l'une quelconque des revendications 1 à 8, **caractérisé en ce que** le moyen de détection (10) est un accéléromètre.

10. Système de sécurité selon la revendication 1, ledit système de sécurité étant **caractérisé en ce qu'**il comprend en outre :
un premier moyen de calcul et de contrôle (12), configuré pour calculer, quand une collision avec un usager de la route en approche est imminente et quand le moyen de sécurité active (4) est activé par le premier moyen de gestion (2), l'étendue de l'activation du moyen de sécurité active (4) du véhicule, et pour fournir un (quatrième) signal représentatif correspondant audit moyen de sécurité active, de manière à contrôler l'étendue de l'activation du moyen de sécurité active (4) ; et
un second moyen de calcul et de contrôle (13), configuré pour calculer, quand une collision avec un usager de la route en approche est imminente et quand le moyen de sécurité passive (8) est activé par le second moyen de gestion (6), l'étendue de l'activation du moyen de sécurité passive (8) du véhicule, et pour fournir un (sixième) signal représentatif correspondant audit moyen de sécurité passive, de manière à contrôler l'étendue de l'activation du moyen de sécurité passive (8).
